# EUROPEAN PATENT SPECIFICATION

(11) **EP 1 260 166 B1**
(45) Date of publication and mention of the grant of the patent: **19.11.2003**
(21) Application number: 01830332.1
(22) Date of filing: 23.05.2001
(51) Int. Cl.: A47J 31/40

(54) **Infusion device for coffee machine**
Infusionsvorrichtung für Kaffeemaschine
Dispositif d'infusion pour machine à café

(43) Date of publication of application: 27.11.2002
(73) Proprietor: RANCILIO MACCHINE PER CAFFE' S.p.A., I-20010 Villastanza di Parabiago (Milano) (IT)
(72) Inventor: Fogagnolo, Armando, I-20010 Villastanza di parabiago (MI) (IT); Bonissi, Vittorio, I-20010 Villastanza di parabiago (MI) (IT)
(74) Representative: Robba, Pierpaolo

(56) References cited:
- FR-A- 2 202 668

## Description

The present invention relates to automatic machines for infusion making, in particular for making espresso coffee, and more particularly it concerns an infusion device for one such machine.

Some kinds of infusion making machines include an infusion device comprising an infusion chamber intended to receive the powdered substance, and a pair of confronting pistons, which penetrate into the chamber in tight manner and between which the powder is compressed. Suitable ducts supply hot water for preparing the infusion so that water passes through the powder, and collect and convey outside the machine the infusion.

Examples of infusion devices of that type are disclosed in US-A 4 852 472 and BE-A 745 939.

According to the first document, the infusion chamber consists of the internal cavity of a cylinder that is made to vertically slide thereby dragging the first piston and lowering it on the second piston to compress the coffee for the infusion. The first piston then remains in the compression position during at least part of the return stroke of the cylinder, to eject the used coffee dose at the end of the percolation time.

In the device described in the second document, the infusion chamber is formed in a cylinder with horizontal axis, which is made to horizontally slide relative to a first stationary piston. The second piston is a moving piston and it is brought into the chamber to compress the ground coffee against the first piston. At the end of the percolation time, the moving piston is moved out of the chamber and the cylinder is brought to such a position that the used coffee dose can be made to fall into the gap between the pistons.

In both known solutions discussed above, the head of one piston (the piston moving with the cylinder according to the first document, and the stationary piston according to the second document) remains in sealing contact with the internal surface of the chamber during a displacement of the chamber bringing the device components to an ejection condition of the used coffee dose. Thus, the sealing gasket in such a head acts also as a scraper to remove coffee residuals, if any, adhering to the chamber walls. This entails a high wear of the gasket. As to the other piston, which moves into and out of the chamber, there is also the drawback of the gasket wear due to the rubbing against the chamber mouth.

Italian Patent Application No. TO 2000A000503 filed on 31.05.2000 discloses an infusion device with a moving chamber, of which the inner surface co-operates with a moving piston and a stationary piston. To reduce the gasket wear, it is proposed that the heads of both pistons comprise two telescopically connected members between which the sealing gasket is arranged. The telescopic connection and the shape of the external surfaces are such that, during the relative movement of the device components, the free end of one piston member engages the gasket and causes a radial expansion thereof when tightness is actually required; otherwise, the gasket is left in non-expanded condition, in which it is not in contact with the internal surface of the chamber. A similar infusion device is disclosed in FR-A-2 202 668.

Yet, in the non-expanded gasket condition, the scraping action is not performed and thus the risk exists that, at the end of an operation cycle, coffee residuals are still present in the infusion chamber.

The object of the invention is to provide an infusion device in which excessive gasket wear is prevented while the cleanliness of the infusion chamber at the end of an operation cycle is still ensured.

This is attained, according to the present invention, by separating the sealing action from that of removing residuals of the powdered substance.

More particularly, the infusion device according to the invention comprises a moving member that has a longitudinal cavity with which at least one piston co-operates to define one side of an infusion chamber, and driving means for causing an axial translation of said member so that it moves from a loading position of a dose of a powdered substance for infusion making to an infusion position, and from the latter to an ejection position of the used dose of the substance, said piston having a head comprising two telescopically connected members defining a seat for a sealing gasket and having external surfaces so shaped that, during powder compression, one of said two members engages the gasket and causes a radial expansion thereof to ensure tightness when the device is in the infusion position. The device is characterised in that one of said two members has, in a region near a filter against which the powdered substance is compressed, a further gasket acting as a scraper ring for removing from the cavity walls, during the translation of the moving member from the infusion position to the ejection position, residuals of the used powdered substance adhering to said walls.

For a better understanding, reference is made to the accompanying drawings, which show preferred embodiments of the invention and in which:
- Fig. 1 is a perspective view of an infusion device embodying the present invention; and
- Figs. 2 to 4 are rear views, in axial vertical cross section, of the infusion device, in three different operation phases.

The following description refers, by way of example, to an infusion device having a general structure as disclosed in the above mentioned Italian Patent Application.

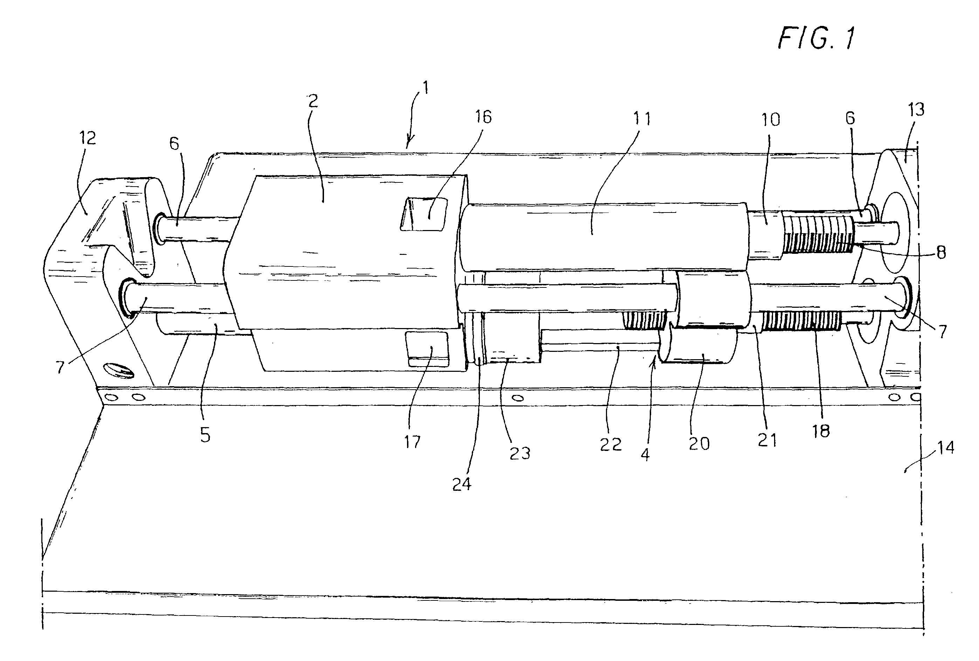

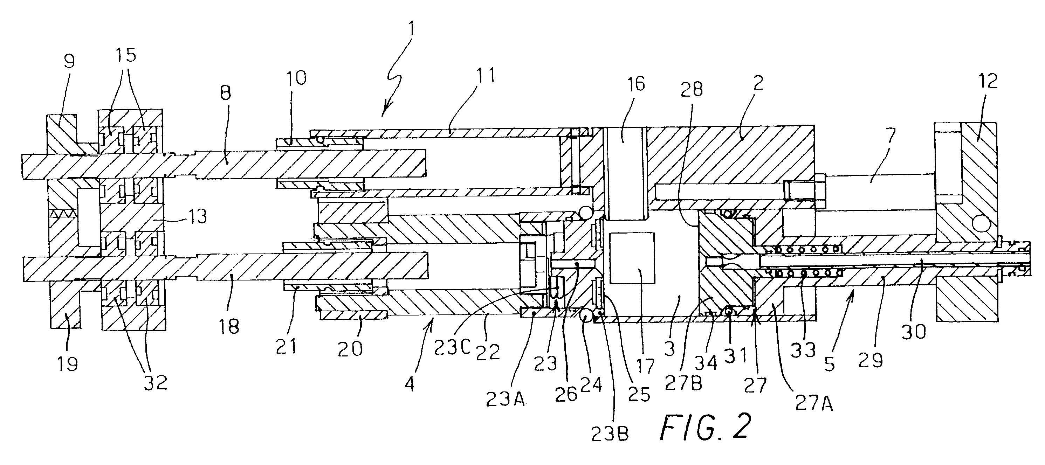

Referring to Fig. 1, the infusion device, denoted in the whole by reference numeral 1, comprises a horizontally moving member or chamber 2, having an internal cavity 3 (shown in Figs. 2 to 4) intended to receive the dose of ground coffee or other powdered substance. A first piston 4, also horizontally moving, and a second stationary piston 5 co-operate with the cavity to define the actual infusion chamber.

Moving chamber 2 is made to slide on guides 6, 7 by a threaded shaft 8 driven by a motor, not shown, through a reduction gear of which Figs. 2 to 4 show the end gear 9, integral with shaft 8. The latter meshes with an internally threaded sleeve 10, integral with a hollow shaft 11 in turn secured to the body of moving chamber 2. Guides 6, 7 are secured in supports 12, 13 carried by a frame 14, and shaft 8 is in turn mounted in bearings 15 (Figs. 2 to 4) located in support 13.

Moving chamber 2 has an upper duct 16 for introducing into infusion chamber 3 ground decaffeinated coffee, coming from a reservoir, not shown, and a pair of confronting side openings or ducts 17 (only one of which can be seen in the drawings) for introducing ground normal coffee, coming from side coffee grinders, also not shown.

Also moving piston 4 is slidably mounted on guides 6, 7, and it is driven by a shaft 18 bearing at one end a gear 19, meshing with gear 9 of shaft 8 driving moving chamber 2 so that the two shafts are simultaneously rotated in opposite directions, in order to simultaneously translate moving chamber 2 and moving piston 4 in opposite directions. Also shaft 18 is carried by support 13, through bearings 32 similar to bearings 15.

Moving piston 4 has a body 20 with lobed shape, of which the central portion is associated with a threaded sleeve 21 meshing with shaft 18, whereas a pair of side lobes has openings through which guides 6, 7 pass. Body 20 is connected, through spokes 22, with piston head 23, which can tightly fit into infusion chamber 3. Tightness is ensured by an O-ring 24.

As shown in Figs. 2 to 4, head 23 is equipped at its free end with a disc-shaped filter 25 for the coffee and has an axial duct 26 for introducing hot water, supplied through tubes, not shown. Head 23 comprises two telescopically connected members 23A, 23B, of which member 23A is secured to spokes 22 and can slide on member 23B, which bears at its end filter 25. The region of filter 25 has a greater diameter than the remaining portion of member 23B and forms a flange defining, together with the free end of member 23A, a seat for O-ring 24. Said free end is so shaped as to cause a radial expansion of O-ring 24 when engaging it. An arrangement of this kind, which is known in se from FR-A 2 202 668, allows keeping O-ring 24 in a non-expanded condition until the O-ring enters into cavity 3, thereby preventing the O-ring wear caused by the rubbing against the mouth of cavity 3. A spring 23C tends to keep members 23A, 23B in a rest condition, in which O-ring 24 is not stressed by member 23A.

Stationary piston 5, mounted in support 12, has a head 27 also comprising two telescopically connected members 27A, 27B and equipped with a disc-shaped filter 28 for the coffee. Member 27A is integral with a rod 29 having an axial duct 30 extending along its whole length and intended to convey the prepared infusion outside infusion device 1. Member 27B is slidably mounted in member 27A against the action of a spring 33 arranged in a seat formed in stem 29, around duct 30. Like member 23B of head 23 of stationary piston 4, member 27B has a portion of enlarged diameter bearing filter 28 and forming a flange defining, together with the free end of member 27A, a seat for O-ring 31. Such free end is so shaped as to cause, when engaging O-ring 31, a radial expansion thereof to make the O-ring adhere to the walls of cavity 3 when tightness is actually required.

Moreover, a second gasket 34, consisting of a ring with rectangular cross-section, is provided in said flange portion to remove from the walls of cavity 2, during a phase of used coffee ejection, possible residuals adhering to the same walls.

Preferably, the longitudinal size of cavity 3 and the lengths of the strokes of shafts 8, 18 are such that gasket 34 always remains inside cavity 3 and lies in correspondence with the mouth of cavity 3 in the phase of used coffee ejection.

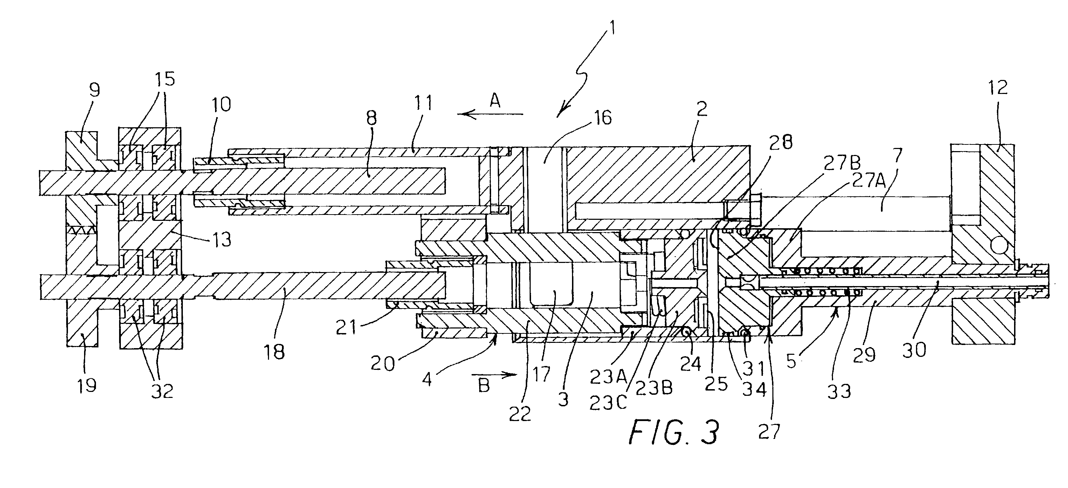

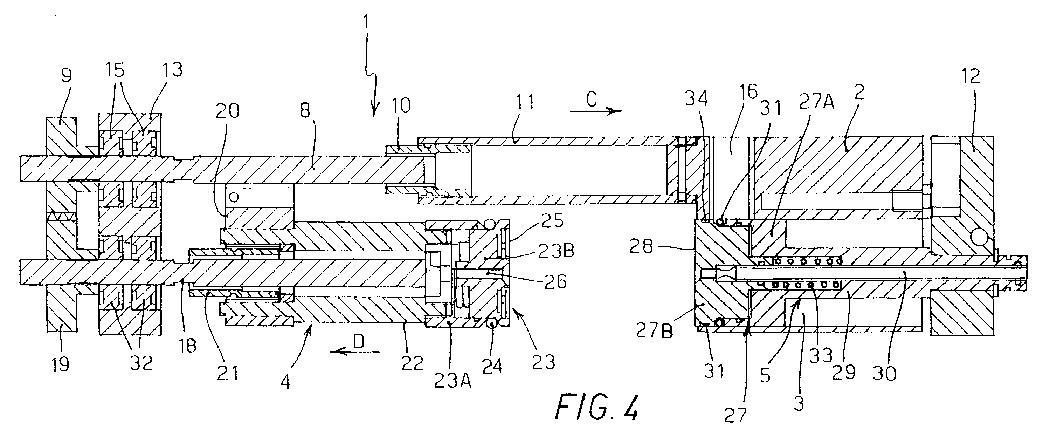

The operation of the infusion device will now be disclosed with reference to Figs. 2 to 4, which show the positions of the different components of the infusion device in the phases of ground coffee loading (Fig. 2), maximum compression and infusion (Fig. 3) and used coffee ejection (Fig. 4). By way of example, it will be assumed that the positions of the different components in the loading phase coincide with the positions taken by the same components in rest conditions of the machine. Thus, when the machine is actuated, openings 16 and 17 already lie in correspondence with the outlets of the feeders of ground coffee and an initial displacement of moving chamber 2 and moving piston 4 is not required. However, it is clear that the rest position could be different, for instance it could coincide with the ejection position.

As shown in Fig. 2, in the loading phase, moving chamber 2 and moving piston 4 are at intermediate points of their strokes. In particular, moving chamber 2 is in such a position that head 27 of stationary piston 5 lies inside cavity 3, at a point between the outlets of ducts 16, 17 and the mouth of cavity 3 facing support 12, whereas head 23 of moving piston 4 is partly introduced into cavity 3, with O-ring 24 adjacent to the mouth of cavity 3 but still outside cavity 3. In such conditions cavity 3 forms a closed infusion chamber and the coffee dose can be introduced through duct 16 or ducts 17.

Once the desired coffee dose has been introduced, shafts 8, 18. are rotated so as to cause the displacement of the moving chamber in the direction of arrow A in Fig. 3, and the simultaneous displacement of moving piston 4, and hence the sliding of head 23 within cavity 3, in the direction of arrow B in Fig. 3. During the initial portion of said sliding, the free ends of members 23A, 27A, of heads 23, 27 of pistons 4, 5 are not in engagement with O-rings 24 and 31, which consequently are not expanded. Therefore, O-ring 24 does not rub against either the mouth of cavity 3, while being introduced into the cavity, or the internal walls thereof once it is inside the cavity. Similarly, O-ring 31 does not rub against the internal walls of cavity 3. Thus, neither O-ring is subjected to wear.

At the same time, due to the displacement of moving chamber 2, the distance between head 27 of the stationary piston and the mouth of cavity 3 facing support 12 will progressively decrease. At the end of the displacement of moving chamber 2 and moving piston 4, infusion device 1 has taken the position shown in Fig. 3. Head 23 of the moving piston is at the minimum distance from head 27 of stationary piston 5, which in turn has attained the mouth of cavity 3 facing support 12. That position is the position of maximum compression of the powder.

The approach of head 23 to the maximum compression position causes a sliding of member 23A onto member 23B and compression of spring 23C. Consequently, member 23A presses on the end flange of member 23B thereby causing expansion of O-ring 24. Radial expansion of the latter ensures tightness with the internal walls of cavity 3. The maximum expansion of O-ring 24 will be attained upon attaining the maximum compression position. At the same time, head 23 pushes head 27 so that member 27B slides within member 27A against of the action of spring 33. Consequently, the free end of member 27B will start sliding within stationary member 27A, which will cause radial expansion of O-ring 31. Once the maximum compression position has been attained, also O-ring 31 ensures tightness with the internal walls of cavity 3.

Under such conditions, the machine is ready for the introduction of infusion water. The rotation of shafts 8, 18 is stopped and hot water is introduced into duct 26. Water passes through filter 25 and the compressed coffee, and the infusion then flows out through filter 28 and duct 30.

At the end of the desired percolation time (set in any suitable manner), shafts 8, 18 are again actuated, but in reverse directions with respect to the compression phase. Moving chamber 2 and moving piston 4 are thus displaced in the directions of arrows C, D in Fig. 4, respectively. During such displacement, springs 23C, 33 bring again both members of the piston heads to their rest positions, so that O-rings 24, 31 are no longer in contact with the internal walls of cavity 3. Moreover, during displacement of moving chamber 2 in the direction of arrow C, gasket 34 will remove coffee residuals, if any, adhering to the chamber walls.

When shafts 8, 18 reach the end of that new displacement, the infusion device is in the condition of used coffee ejection, shown in Fig. 4. Moving piston 4 is adjacent to support 13 and is completely outside cavity 3, whereas moving chamber 2 is adjacent to support 12. Head 27 of stationary piston 5 is located in correspondence of the end of cavity 3 remote from support 12, with filter 28 outside cavity 3 and gasket 34 in correspondence of the cavity mouth. Therefore the used coffee detaching from the filters and the coffee residuals, if any, removed by gasket 34 can fall by gravity into the gap between confronting heads 23, 27. Moving chamber 2 and moving piston 4 can then be brought again to the position shown in Fig. 2 and the machine is ready for a new cycle.

The previous description clearly shows that the invention ensures a good cleanliness of the device without any useless wear of O-rings 24, 31. In practice the O-rings are expanded and are in contact with the cavity wall substantially during the only percolation time, when the heads are stationary; on the contrary, during the relative displacement of chamber 2 and heads 23, 27, the O-rings are not expanded and thus they do not rub against the walls. Moreover, wear of O-ring 24 due to rubbing against the mouth of cavity 3 is avoided.

As said, it is preferred that head 27 of the stationary piston always remains within cavity 3 during operation. Yet, should the arrangement be such as to make the head move completely out of cavity 3, the two-part constructions of head 27 avoids interference between O-ring 31 and the mouth, as it occurs for head 23 of the moving piston. As to gasket 34, the scraping action demands a lower pressure against the cavity wall than that required by the sealing action. Thus, even if gasket 34 is substantially permanently in contact with the walls, the wear is lower. Moreover, if desired, gasket 34 could be made of a more wear-resistant material than that used for O-rings 24, 31.

It is to be appreciated that, for sake of simplicity, the control means for starting and stopping the shaft driving motors, for dosing and introducing the powdered substance into the infusion chamber, for heating water etc. have not been shown. On the other hand, said means are not affected by the present invention and are well known to the skilled in the art.

It is evident that the above description is given only by way of non limiting example and that all changes and modifications suggested by the experience of the skilled in the art lie within the scope of the invention. In particular, the invention is applicable not only to the structure described here by way of example, but also to any infusion device where a relative translation exists between a moving chamber and a piston of which the head co-operates to define one side of an infusion chamber and to remove, during an ejection phase of the used substance, possible residuals adhering to the walls of the infusion chamber.

## Claims

1. An infusion device for a machine for preparing infusions from a compressed powdered substance, the device comprising a moving member (2) that has a longitudinal cavity (3) with which at least one piston (5) co-operates to define one side of an infusion chamber, and that is associated with driving means (8, 9, 18, 19) for causing an axial translation of said moving member from a loading position of a dose of said powdered substance to an infusion position, and from the latter to an ejection position of the used dose of the substance, said piston (5) having a head (27) comprising two telescopically connected members (27A, 27B) defining a seat for a sealing gasket (31) and having external surfaces so shaped that, during said translation from the loading position to the infusion position, one end of a first one (27A) of said two members (27A, 27B) engages the gasket (31) and causes a radial expansion thereof to ensure tightness when the device is in the infusion position, **characterised in that** said head (27) is further provided, in a region adjacent to a filter (28) against which the powdered substance can be compressed, with a further gasket (34) acting as a scraper ring for removing from the walls of the cavity (3), during the translation of the moving member (2) from the infusion position to the ejection position, residuals of the used powdered substance adhering to said walls.

2. An infusion device as claimed in claim 1, **characterised in that** said further gasket (34) is arranged in a seat formed in an end flange of said second member (27B) to which the filter (28) is secured.

3. An infusion device as claimed in claim 1 or 2, **characterised in that** said further gasket (34) has a substantially rectangular cross section.

4. An infusion device as claimed in any preceding claim, **characterised in that** said at least one piston (5) is a stationary piston, of which the head (27) remains inside said cavity (3) during the whole of a working cycle of the infusion device.

5. An infusion device as claimed in any preceding claim, **characterised in that** said further gasket (34) is arranged on said flange in such a position that, in said ejection position, the gasket lies within the cavity (3), substantially in correspondence with a cavity mouth, whereas said filter is outside the cavity.

6. An infusion device as claimed in any preceding claim, **characterised in that** said machine for preparing infusions from a compressed powdered substance is a machine for making espresso coffee.

## Patentansprüche

1. Infusionsvorrichtung für eine Maschine zur Herstellung von Infusionen aus einer komprimierten pulverisierten Substanz, wobei die Vorrichtung ein bewegliches Teil (2) umfasst, das eine längliche Höhlung (3) aufweist, die mit mindestens einem Kolben (5) zusammenwirkt, um eine Seite einer Infusionskammer zu definieren, und die den antreibenden Mitteln (8, 9, 18, 19) zugeordnet ist, um eine axiale Übersetzung der beweglichen Teile aus einer Einfüllstellung einer Dosis der pulverisierten Substanz in eine Infusionsstellung zu bewirken, und aus der Letzteren in eine Auswurfstellung der verbrauchten Dosis der Substanz, wobei der Kolben (5) einen Kopf (27) aufweist, der zwei teleskopartig miteinander verbundene Teile (27A, 27B) umfasst, die eine Passung für eine versiegelnde Dichtung (31) definieren und eine Außenoberfläche aufweisen, die so ausgebildet ist, dass bei der Übersetzung aus der Einfüllstellung in die Infusionsstellung das eine Ende eines ersten (27A) der beiden Teile (27A, 27B) die Dichtung (31) angreift und eine radiale Ausdehnung derselben bewirkt, um eine Undurchlässigkeit sicherzustellen, wenn die Vorrichtung sich in der Infusionsstellung befindet, **dadurch gekennzeichnet, dass** der Kopf (27) weiterhin in einem Bereich, der an einen Filter (28) angrenzt, gegen den die pulverisierte Substanz komprimiert wird, eine weitere Dichtung (34) aufweist, die als Ringschaber wirkt, um während der Übersetzung des beweglichen Teils (2) aus der Infusionsstellung in die Auswurfstellung Reste der verbrauchten pulverisierten Substanz, die an dieser Wand anliegen, von der Höhlungswand (3) zu entfernen.

2. Infusionsvorrichtung nach Anspruch 1, **dadurch gekennzeichnet, dass** die weitere Dichtung (34) in einer Passung angeordnet ist, die am Endflansch des zweiten Teils (27B) gebildet ist, an dem der Filter (28) gesichert ist.

3. Infusionsvorrichtung nach Anspruch 1 oder 2, **dadurch gekennzeichnet, dass** die weitere Dichtung (34) einen im Wesentlichen rechteckigen Querschnitt aufweist.

4. Infusionsvorrichtung nach einem der vorangegangenen Ansprüche, **dadurch gekennzeichnet, dass** mindestens ein Kolben (5) ein feststehender Kolben ist, dessen Kopf (27) während des gesamten Betriebsablaufs der Infusionsvorrichtung innerhalb der Höhlung (3) verbleibt.

5. Infusionsvorrichtung nach einem der vorangegangenen Ansprüche, **dadurch gekennzeichnet, dass** die weitere Dichtung (34) auf dem Flansch in einer derartigen Stellung angeordnet ist, dass in der Auswurfstellung die Dichtung innerhalb der Höhlung (3) liegt, und im Wesentlichen an eine Mündung der Höhlung anschließt, wobei der Filter sich außerhalb der Höhlung befindet.

6. Infusionsvorrichtung nach einem der vorangegangenen Ansprüche, **dadurch gekennzeichnet, dass** die Maschine zur Herstellung von Infusionen aus einer komprimierten pulverisierten Substanz eine Maschine zur Herstellung von Espressokaffee ist.

## Revendications

1. Dispositif d'infusion pour une machine de préparation d'infusions à partir d'une substance en poudre comprimée, le dispositif comprenant un élément mobile (2) qui possède une cavité longitudinale (3) avec laquelle au moins un piston (5) coopère, afin de définir un coté d'une chambre d'infusion et qui est associé à des moyens d'entraînement (9, 18, 19) pour causer une translation axiale dudit élément mobile à partir d'une position de chargement d'une dose de ladite substance en poudre à une position d'infusion, et à partir de cette dernière à une position d'éjection de la dose utilisée de la substance, ledit piston (5) ayant une tête (27) comprenant deux éléments connectés par emboîtage (27A, 27B) définissant un siège pour un joint d'étanchéité (31) et ayant des surfaces externes profilées de telle sorte que, pendant ladite translation de la position de chargement à la position d'infusion, une extrémité d'un premier (27A) desdits deux éléments (27A, 27B) vient en contact avec le joint (31) et provoque son expansion radiale pour assurer l'étanchéité lorsque le dispositif est en position d'infusion, **caractérisé en ce que** ladite tête (27) est équipée de plus, dans une zone adjacente à un filtre (28) contre lequel la substance en poudre peut être comprimée, d'un joint d'étanchéité supplémentaire(34) agissant en tant que segment racleur pour éliminer des parois de la cavité (3), pendant la translation de l'élément mobile (2) à partir de la position d'infusion à la position d'éjection, les résidus de la substance en poudre utilisée adhérant auxdites parois.

2. Dispositif d'infusion selon la revendication 1, **caractérisé en ce que** ledit joint supplémentaire (34) est disposé dans un siège formé dans une bride d'extrémité dudit second élément (27B) auquel le filtre (28) est fixé.

3. Dispositif d'infusion selon la revendication 1 ou 2, **caractérisé en ce que** ledit joint d'étanchéité (34) possède une coupe droite essentiellement rectangulaire.

4. Dispositif d'infusion selon l'une quelconque des revendications précédentes, **caractérisé en ce que** ledit au moins un piston (5) est un piston fixe, dont la tête (27) demeure à l'intérieur de ladite cavité (3) pendant tout le cycle de travail du dispositif d'infusion.

5. Dispositif d'infusion selon l'une quelconque des revendications précédentes, **caractérisé en ce que** ledit joint supplémentaire (34) est disposé sur ladite bride dans une position telle que, dans ladite position d'éjection, le joint se trouve dans la cavité (3), essentiellement en correspondance avec un orifice de cavité, tandis que ledit filtre se trouve à l'extérieur de la cavité.

6. Dispositif d'infusion selon l'une quelconque des revendications précédentes, **caractérisé en ce que** ladite machine pour préparer des infusions à partir d'une substance en poudre comprimée est une machine à faire des cafés expresso.
